# EUROPÄISCHE PATENTSCHRIFT

(11) **EP 1 057 767 B1**
(45) Veröffentlichungstag und Bekanntmachung des Hinweises auf die Patenterteilung: **18.06.2003**
(21) Anmeldenummer: 00109010.9
(22) Anmeldetag: 26.04.2000
(51) Int. Cl.: B65H 75/44, G01B 3/10

(54) **Seillängengeber zur Erzeugung eines Seillängensignals**
Cable length transmitter for producing a signal proportional to the length of the cable
Transmetteur de longueur de câble délivrant un signal proportionnel à la longeur du câble

(30) Priorität: 02.06.1999 DE 19925364
(43) Veröffentlichungstag der Anmeldung: 06.12.2000
(73) Patentinhaber: Fernsteuergeräte Kurt Oelsch GmbH, 12347 Berlin (DE)
(72) Erfinder: Schulz, Klaus-Dieter, 12347 Berlin (DE)
(74) Vertreter: Weisse, Jürgen, Dipl.-Phys.

(56) Entgegenhaltungen:
- EP-A- 0 778 239
- DE-C- 3 833 203
- DE-C- 19 852 182

## Beschreibung

Die Erfindung betrifft einen Seillängengeber zur Erzeugung eines Seillängensignals, mit einem Gehäuse, einer in dem Gehäuse angeordneten, gegen die Wirkung eines Rückstellantriebs drehbar gelagerten und längsbeweglich geführten Seiltrommel mit einem auf die Seiltrommel aufgewickelten Meßseil, einem gehäusefesten Meßseilausgang, über welchen das Meßseil aus dem Gehäuse herausgeführt ist, einem Stellgetriebe, über welches die Seiltrommel nach Maßgabe der Umdrehungen derart in Axialrichtung im Gehäuse verstellbar ist, daß sich die von der Seiltrommel jeweils aufgewickelten oder abgewickelten Windungen des Meßseils im wesentlichen in der Ebene des Meßseilausgangs befinden, und einem Geber zur Erzeugung eines Seillängensignals nach Maßgabe der abgewickelten Meßseillänge.

Ein solcher Seillängengeber ist bekannt durch die EP 0 778 239 B1. Bei diesem bekannten Seillängengeber ist in dem Gehäuse eine zentrale Welle drehbar gelagert. Die Seiltrommel ist undrehbar aber längsbeweglich auf dieser zentralen Welle geführt. Auf der Welle sitzt eine gehäusefest gehaltene, mit einem Außengewinde versehene Gewindehülse. An der Seiltrommel ist eine mit einem Innengewinde versehene Mutter vorgesehen, die mit dem Außengewinde der Gewindehülse in Eingriff ist, wobei die Gewindehülse und die Mutter das Stellgetriebe bilden.

Bei solchen und ähnlichen Seillängengebern sind üblicherweise als Geber zur Erzeugung des Seillängensignals Potentiometer vorgesehen, welche auf die Drehbewegungen der Seiltrommel oder einer mit der Seiltrommel drehbaren Welle ansprechen.

Die bekannten Anordnungen sind aufwendig. Die Potentiometer unterliegen Verschleiß.

Die DE 42 04 153 A1 zeigt eine von einem Motor angetriebene Winde zum Auf- und Abwickeln eines Seils, das eine Last trägt. Diese Winde weist eine Trommel auf, die starr mit einer Gewindespindel verbunden ist. Die Gewindespindel sitzt in einer in einem Rahmen feststehend gehaltenen Mutter. Wenn die Trommel von dem Motor über ein Schneckengetriebe angetrieben wird, wird sie durch die Gewindespindel so axial verschoben, daß das Seil stets an der gleichen Stelle von der Trommel abgewickelt wird. Wenn die Axialbewegung der Trommel ein zulässiges Maß überschreitet, wird über einen Nocken ein Schalter geöffnet und der Motor stillgesetzt. Damit wird die maximal zulässige Seillänge vorgegeben. Das ist praktisch ein Endschalter. Eine Messung der Seillänge erfolgt dort mittels eines Winkelgebers, der auf die Drehbewegung des Motors anspricht.

Es handelt sich dort nicht um einen Seillängengeber sondern um eine Tragseilanordnung. Die Länge des abgewickelten Seils wird -ähnlichwie bei den vorstehend diskutierten Seillängengebern- durch einen Winkelgeber gemessen

Der Erfindung liegt die Aufgabe zu Grunde, einen einfach aufgebauten und leicht zu fertigenden, verschleißarmen Seillängengeber zu schaffen.

Erfindungsgemäß wird diese Aufgabe bei einem Seillängengeber der eingangs genannten Art dadurch gelöst, daß
(a) eine seiltrommelfeste Welle eine Gewindespindel bildet,
(b) die Gewindespindel in einem Innengewinde des Gehäuses geführt ist und
(c) der Geber zur Erzeugung des Seillängensignals ein berührungslos auf die Axialbewegung der Welle ansprechender Geber ist.

Das ergibt einen sehr einfachen Aufbau. Abgegriffen wird zur Erzeugung des Seillängensignals die axiale Bewegung der Welle. Dieser Abgriff kann auf sehr einfache Weise berührungslos erfolgen.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.
- Fig. 1: zeigt einen Längsschnitt eines Seillängengebers.
- Fig.2: ist eine Ansicht des Seillängengebers von oben in Fig.1.
- Fig.3: zeigt in vergrößertem Maßstab eine Einzelheit "Z" von Fig.1.
- Fig.4: ist ein Längsschnitt ähnlich Fig.1 und zeigt eine abgewandelte Ausführung des Gebers zur Erzeugung eines elektrischen Seillängensignals.

In Fig. ist mit 10 ein Gehäuse des Seillängengebers bezeichnet. Das Gehäuse 10 besteht aus einem Mittelteil 12, einem topfförmigen oberen Deckelteil 14 und einem topfförmigen unteren Deckelteil 16. Das Mittelteil 12 bildet eine Trennwand 18 und einen Mantelabschnitt 20, so daß es auch topfförmige Gestalt hat. Die Dicke der Trennwand 18 ist aber wesentlich größer als die Wandstärke des Mantelabschnitts 20. In der Trennwand 18 ist eine zentrale Bohrung 22 auf. Die Bohrung 22 ist mit einem Innengewinde 24 versehen. Die Trennwand 18 teilt den Innenraum des Gehäuses 10 in zwei Kammern: Eine erste Kammer 26 enthält eine spulenförmige Seiltrommel 28. Eine zweite Kammer 30 enthält einen noch zu beschreibenden Geber 32 zur Erzeugung eines elektrischen Seillängensignals.

Auf die Seiltrommel ist ein Meßseil 34 in einer Lage aufgewickelt. Das Meßseil 34 ist durch einen Meßseilauslaß 36 aus dem Gehäuse herausgeführt. Die Seiltrommel 28 weist eine mit der Seiltrommel 28 starr verbundene Welle 38 mit zwei auf entgegengesetzten Seiten der Seiltrommel 28 angeordneten Achsstümpfen 40 und 42 auf. Der erste Wellenstumpf 40 weist einen glatt zylindrischen Abschnitt 44 und eine daran anschließende, mit einem Außengewinde versehene Gewindespindel 46 auf Die Gewindespindel 46 ist in dem Innengewinde 24 der Bohrung 22 geführt. Der erste Wellenstumpf 40 ist in einem in der Bohrung 22 sitzenden Lager 48 drehbar und axial beweglich geführt. Der zweite Wellenstumpf 42 weist von seiner Stirnseite her eine zentrale, axiale Sacklochbohrung 50 auf. In die Sacklochbohrung 50 ragt ein gehäusefester Zapfen 52, der in dem Boden des ersten Deckelteils 14 sitzt. Der Wellenstumpf 40 ist über ein Lager 54 drehbar und axial beweglich auf dem Zapfen 52 gelagert.

An der Stirnfläche des ersten Wellenstumpfes 40 sitzt ein zentraler, axialer Zapfen 56, der einen Teil der Welle 38 bildet. Koaxial zu dem Zapfen 56 und axial gegeneinander versetzt sind zwei Spulen 58 und 60 einer Differenzdrossel 62 angeordnet. Auf dem Zapfen 56 sitzt ein ferromagnetischer Ring 64. Die beiden Spulen 58 und 60 sind in üblicher Weise in einer Brückenschaltung angeordnet Durch den ferromagnetischen Ring 64 werden die Induktivitäten der beiden Spulen gegensinnig verändert, so daß sich ein entsprechendes Ausgangssignal ergibt.Die Differenzdrossel sitzt auf einer Leiterplatte 64, welche die zugehörigen elektronischen Bauteile 66 trägt. Diese Differenzspulen-Anordnung spricht berührungslos auf axiale Bewegungen der Welle 38 an.

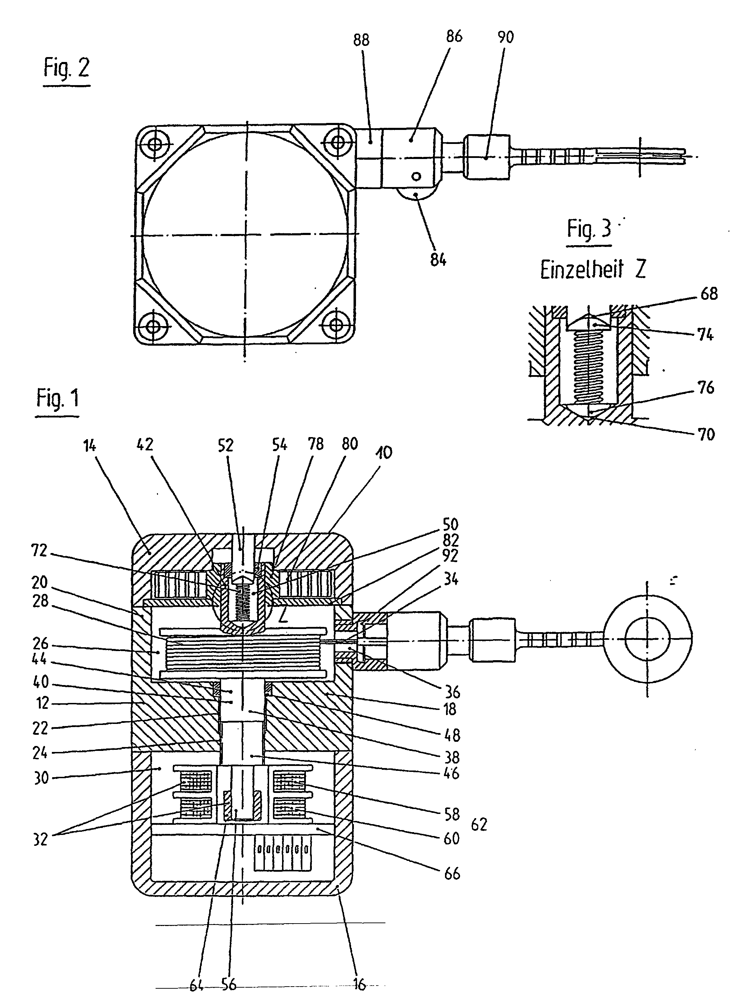

Der Zapfen 52 bildet an seiner Stirnfläche eine konische Vertiefung 68, wie sie durch einen Bohrer erzeugt wird. Entsprechend ist auf dem Grund der Sacklochbohrung 50 eine konische Vertiefung 70 gebildet. Zwischen dem Zapfen 52 und dem Grund der Sacklochbohrung 50 wirkt eine Druckfeder 72. Die Druckfeder 72 ist über kalottenförmige Druckstücke 74 und 76 an den konischen Vertiefungen 68 bzw. 70 abgestützt. Durch die Druckfeder 72 wird die Meßseilrolle 28 nach unten in Fig.1 gedrückt. Dadurch wird das Spiel zwischen dem Außengewinde der Gewindespindel 46 und dem Innengewinde 24 der Bohrung 22 herausgenommen. Es erfolgt eine eindeutige Führung, ohne daß große Anforderungen an die Toleranzen der Gewinde gestellt werden. Damit ist aber das Signal des von der Differenzspulen-Anordnung gebildeten Gebers ein eindeutiges Maß für die Meßseillänge. Die geringeren Anforderungen an die Toleranzen der Gewinde ergeben sich auch daraus, daß die Führung durch die Lager 48 und 54 erfolgt. Die Lager 48 und 54 bestimmen die Orientierung der Welle 38 und nicht die Gewinde.

Der zweite Wellenstumpf 42 weist (in Fig.1 nicht sichtbare) Abflachungen auf. Eine Buchse 78 sitzt unverdrehbar auf dem Wellenstumpf 42. Der Rückstellantrieb ist von einer spiralig gewickelten Blattfeder 80 gebildet, die innen an der Buchse 78 und außen an dem Rand des topfförmigen Deckelteils 14, also am Gehäuse 10, befestigt ist. Die Blattfeder 80 ist in dem Deckelteil 14 durch eine Zwischenwand 82 abgedeckt.

Das Meßseil 34 ist über eine Rolle 84 geführt. Die Rolle 84 ist so gelagert, daß das durch den Meßseilauslaß 36 austretende Meßseil 34 tangential auf die Rolle läuft und über die Rolle um bis zu 90° umgelenkt werden kann. Die Rolle 84 ist in einem Rollengehäuse 86 gelagert. Das Rollengehäuse 86 sitzt auf einem Stutzen 88, welcher an dem Gehäuse 10 um den Meßseilauslaß 36 herum koaxial zu dem austretenden Meßseil 34 angebracht ist. Das Rollengehäuse 86 ist um eine mit dem austretenden Meßseil 34 fluchtende, in Fig.1 waagerechte Achse 90 relativ zu dem Stutzen 88 verdrehbar. Damit kann die Orientierung der Rolle 84 verändert werden, wobei das Meßseil 34 aber immer tangential auf die Rolle 84 aufläuft. Das Meßseil 34 kann daher in verschiedenen Radialebenen bezogen auf die Achse 90 abgelenkt werden und läuft immer über die Rolle 84. Das Rollengehäuse 86 kann mittels einer Rastvorrichtung 92 in verschiedenen Winkellagen im Stutzen 88 einrasten.

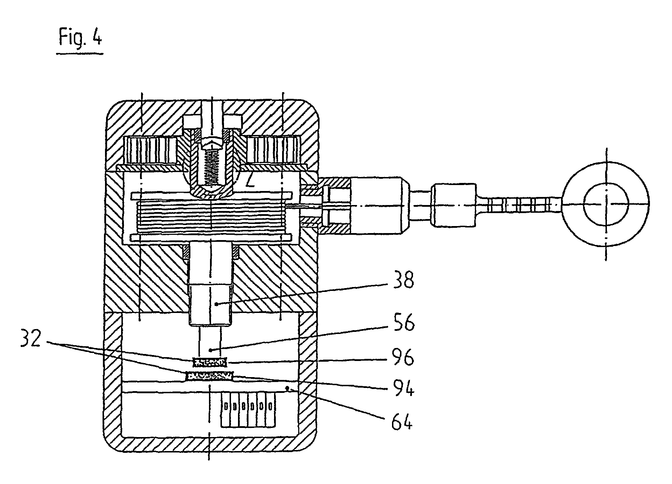

Die Ausführung nach Fig.4 hat den gleichen Grundaufbau wie die Ausführung nach Fig.1. Entsprechende Teile sind in beiden Figuren mit den gleichen Bezugszeichen versehen wie in Fig.1.

Bei der Ausführung nach Fig.4 dient als berührungsloser Geber 32, der auf die axiale Bewegung der Welle 38 anspricht und ein elektrisches Seillängensignal liefert, ein Hall-Sensor 94, der auf der Leiterplatte 64 sitzt. Der Hall-Sensor 94 wirkt mit einem Magneten 96 zusammen, der an der Stirnfläche des Zapfens 56 montiert ist.

## Patentansprüche

1. Seillängengeber zur Erzeugung eines Seillängensignals, mit einem Gehäuse (10), einer in dem Gehäuse (10) angeordneten, gegen die Wirkung eines Rückstellantriebs (80) drehbar gelagerten und längsbeweglich geführten Seiltrommel (28) mit einem auf die Seiltrommel (28) aufgewickelten Meßseil (34), einem gehäusefesten Meßseilausgang (36), über welchen das Meßseil (34) aus dem Gehäuse (10) herausgeführt ist, einem Stellgetriebe mit einem Innengewinde (24) und einem Außengewinde, über welches die Seiltrommel (28) nach Maßgabe der Umdrehungen derart in Axialrichtung im Gehäuse (10) verstellbar ist, daß sich die von der Seiltrommel (28) jeweils aufgewickelten oder abgewickelten Windungen des Meßseils (34) im wesentlichen in der Ebene des Meßseilausgangs (36) befinden, und einem Geber (32) zur Erzeugung eines Seillängensignals nach Maßgabe der abgewickelten Meßseillänge,
**dadurch gekennzeichnet, daß**
(a) eine seiltrommelfeste Welle (38) eine Gewindespindel (46) bildet,
(b) die Gewindespindel (46) in einem Innengewinde (24) des Gehäuses (10) geführt ist und
(c) der Geber (32) zur Erzeugung des Seillängensignals ein berührungslos auf die Axialbewegung der Welle (38) ansprechender Geber ist.

2. Seillängengeber nach Anspruch 1, **dadurch gekennzeichnet, daß** das Gehäuse (10) eine Zwischenwand (18) aufweist, in welcher die Gewindespindel (46) in einer mit dem Innengewinde (24) versehenen Bohrung (22) geführt ist.

3. Seillängengeber nach Anspruch 1 oder 2, **dadurch gekennzeichnet, daß** die Welle (38) durch eine in axialer Richtung wirkende Druckfeder (72) belastet ist.

4. Seillängengeber nach Anspruch 3, **dadurch gekennzeichnet, daß**
(a) die Welle (38) mit einem gewindespindelseitigen ersten Wellenstumpf (40) über ein Lager (44) drehbar und axial beweglich in der Zwischenwand (18) gelagert ist,
(b) die Welle (38) in einem der Gewindespindel (46) abgewandten zweiten Wellenstumpf (42) eine axiale Sacklochbohrung (50) aufweist,
(c) in die Sacklochbohrung (50) ein gehäusefester Zapfen (52) hineinragt und
(d) der zweite Wellenstumpf (42) über ein Lager (54) drehbar und axial beweglich auf dem Zapfen (52) gelagert ist.

5. Seillängengeber nach Anspruch 4, **dadurch gekennzeichnet, daß** die Druckfeder (72) zwischen der Stirnfläche des Zapfens (52) und dem Grund der Sacklochbohrung (50) angeordnet ist.

6. Seillängengeber nach Anspruch 5, **dadurch gekennzeichnet, daß**
(a) in der Stirnfläche des Zapfens (52) und am Grund der Sacklochbohrung (50) konische Vertiefungen (68 bzw. 70) gebildet sind und
(b) die Druckfeder (72) über kalottenförmige Druckstücke (74,76) an der Stinfläche des Zapfens (52) und dem Grund der Sacklochbohrung (50) abgestützt ist.

7. Seillängengeber nach einem der Ansprüche 4 bis 6, **dadurch gekennzeichnet, daß**
(a) der zweite Wellenstumpf (42) abgeflacht und undrehbar mit einer Buchse (78) verbunden ist und
(b) die Rückstellantrieb eine spiralig gewickelte Bandfeder (80) ist, die einerseits an der Buchse (78) und andererseits an einer Mantelfläche des Gehäuses (10) befestigt ist.

8. Seillängengeber nach einem der Ansprüche 1 bis 7, **dadurch gekennzeichnet, daß** die Zwischenwand (18) den Innenraum des Gehäuses (10) in zwei Kammern unterteilt, von denen die eine Kammer (26) die Seiltrommel (28) und die andere Kammer (30) den Geber (32) enthält.

9. Seillängengeber nach Anspruch 8, **dadurch gekennzeichnet, daß** der Geber (32) eine Differenzdrossel (62) enthält.

10. Seillängengeber nach Anspruch 9, **dadurch gekennzeichnet, daß**
(a) die Differenzdrossel (62) zwei zu der Welle der Seiltrommel (28) gleichachsige, axial gegeneinander versetzte Spulen (58,60) aufweist und
(b) an einem Wellenstumpf (40) ein axialer Zapfen (56) sitzt, der einen ferromagnetischen Kern (64) trägt.

11. Seillängengeber nach Anspruch 8, **dadurch gekennzeichnet, daß** der Geber 32 einen Hall-Sensor (94) enthält, der mit einem an der Welle (38) angebrachten Magneten (96) zusammenwirkt.

12. Seillängengeber nach einem der Ansprüche 1 bis 11, **dadurch gekennzeichnet, daß**
(a) das aus dem Gehäuse (10) an einem Meßseilaustritt (36) austretende Meßseil (38) tangential auf eine Rolle (84) geführt ist, welche eine Umlenkung des Meßseils (38) gestattet und
(b) die Rolle (84) in einem Rollengehäuse (86) gelagert ist, das seinerseits um eine mit dem austretenden Meßseil (38) fluchtende Achse (90) drehbar relativ zu dem Gehäuse gelagert ist.

13. Seillängengeber nach Anspruch 12, **dadurch gekennzeichnet, daß** das Rollengehäuse (86) in diskreten Winkelstellungen einrastbar ist.

## Claims

1. Rope length transmitter for generating a rope length signal, having a housing (10), a longitudinally movably guided rope drum (28) arranged in the housing (10), rotatable against the action of a restoring driving mechanism (80) and having a measuring rope (34) wound up on the rope drum (28), a housing-fixed measuring rope exit (36), through which the measuring rope (34) is guided out of the housing (10), an adjusting gearing having an internal thread (24) and an external thread and being arranged to adjust the rope drum (28) in axial direction in the housing (19) in accordance with the rotary motion in such a manner, that the winding of the measuring rope (34) being wound off from or wound up winding on the rope drum (28) is located substantially in the plane of the measuring rope exit (36), and a transmitter (32) for generating a rope length signal as a function of the wound-off measuring rope length,
**characterized in that**
(a) a rope drum fixed shaft (38) forms a threaded spindle (46),
(b) the threaded spindle (46) is guided in the internal thread (24) of the housing (10), and
(c) the transmitter (32) for generating the rope length signal is a contactless transmitter responding to the axial movement of the shaft (38).

2. Rope length transmitter as set forth in claim 1, **characterized in that** the housing (10) has a partition (18), in which the threaded spindle (46) is guided in a bore (22) having an internal thread (24).

3. Rope length transmitter as set forth in claim 1 or 2, **characterized in that** the shaft (38) is loaded by a compression spring (72) acting in axial direction.

4. Rope length transmitter as set forth in claim 3, **characterized in that**
(a) the shaft (38) is mounted with a first shaft end on the side of the threaded spindle rotatably and axially movably through a bearing (44) in the partition (18),
(b) the shaft (38) has an axial blind hole bore (50) in a second shaft end (42) remote from the threaded spindle (46),
(c) a housing-fixed pin (52) extends into the blind hole bore (50), and
(d) the second shaft end (42) is mounted rotatably and axially movably in a bearing (54) on the pin (52).

5. Rope length transmitter as set forth in claim 4, **characterized in that** the compression spring (72) is arranged between the end face of the pin (52) and the bottom of the blind hole bore (50).

6. Rope length transmitter as set forth in claim 5, **characterized in that**
(a) conical recesses (68 and 70, respectively) are formed in the end face of the pin (52) and in the bottom of the blind hole bore (50), and
(b) the compression spring (72) is supported through concave thrust members (74,76) at the end face of the pin (52) and at the bottom of the blind hole bore (50).

7. Rope length transmitter as set forth in any one of the claims 4 to 6, **characterized in that**
(a) the second shaft end (42) is flattened and non-rotatably connected to a bushing (78), and
(b) the restoring driving mechanism is a flat spiral spring (80), which is attached on one side to the bushing (78) and on the other side to a peripheral surface of the housing (10).

8. Rope length transmitter as set forth in any one of the claims 1 to 7, **characterized in that** the partition (18) divides the interior space of the housing (10) into two chambers, of which one chamber (26) accommodates the rope drum (28) and the other chamber (30) accommodates the transmitter (32).

9. Rope length transmitter as set forth in claim 8, **characterized in that** the transmitter (32) comprises a differential inductor (62).

10. Rope length transmitter as set forth in claim 9, **characterized in that**
(a) the differential inductor (62) has two coils (58,60) axially spaced from each other and coaxial with the shaft of the rope drum (28), and
(b) an axial pin (56) carrying a ferromagnetic core (64) is located at a shaft end (40).

11. Rope length transmitter as set forth in claim 8, **characterized in that** the transmitter 32 comprises a Hall sensor (94), which cooperates with a magnet (96) attached to the shaft (38).

12. Rope length transmitter as set forth in any one of the claims 1 to 11, **characterized in that**
(a) the measuring rope (38) exiting the housing (10) at a measuring rope exit (36) is guided tangentially on a roller (84), which allows deflection of the measuring rope (38), and
(b) the roller (84) is mounted in a roller housing (86), which, in turn, is mounted rotatably relative to the housing about an axis (90) aligned with the exiting measuring rope (38).

13. Rope length transmitter as set forth in claim 12, **characterized in that** the roller housing (86) is adapted to be snapped in at discrete angular positions.

## Revendications

1. Capteur de déplacement linéaire à câble destiné à générer un signal de déplacement linéaire, muni d'un boîtier (10), d'un tambour de câble (28) disposé dans le boîtier (10), guidé de façon susceptible de se déplacer longitudinalement et logé de façon susceptible de tourner contre l'effet d'un entraînement de rappel (80), le tambour de câble étant muni d'un câble de mesure (34) enroulé sur celui-ci (28), d'une sortie de câble de mesure (36) fixe par rapport au boîtier par l'intermédiaire de laquelle le câble de mesure (34) est guidé hors du boîtier (10), d'un mécanisme de commande muni d'un filetage femelle et d'un filetage mâle par l'intermédiaire duquel le tambour de câble (28) est susceptible d'être déplacé dans le boîtier (10) dans le sens axial en fonction du nombre de tours de sorte que les spires du câble de mesure (34) respectivement enroulées ou déroulées par le tambour de câble (28) se trouvent essentiellement dans le plan de la sortie de câble (36), et d'un capteur (32) destiné à générer un signal de déplacement linéaire en fonction du déplacement linéaire effectué par le câble de mesure,
**caractérisé en ce que**
(a) un arbre (38) fixe par rapport au tambour de câble forme une broche filetée (46),
(b) la broche filetée (46) est guidée dans un filetage femelle (24) du boîtier (10) et
(c) le capteur (32) destiné à générer le signal de déplacement linéaire est un capteur répondant sans contact au déplacement axial de l'arbre (38).

2. Capteur de déplacement linéaire à câble selon la revendication 1, **caractérisé en ce que** le boîtier (10) présente une paroi séparatrice dans laquelle la broche filetée (46) est guidée dans un perçage (22) pourvu d'un filetage femelle (24).

3. Capteur de déplacement linéaire à câble selon la revendication 1 ou 2, **caractérisé en ce que** l'arbre (38) est sollicité par un ressort de pression (72) agissant dans le sens axial.

4. Capteur de déplacement linéaire à câble selon la revendication 3, **caractérisé en ce que**
(a) l'arbre (38) est logé de façon susceptible de tourner avec un premier bout d'arbre (40) situé du côté de la broche filetée par l'intermédiaire d'un palier (44) et de façon susceptible de se déplacer axialement dans la paroi séparatrice (18),
(b) l'arbre (38) présente, dans un second bout d'arbre (42) opposé à la broche filetée (46), un perçage en trou borgne (50) axial,
(c) un tourillon (52) fixe par rapport au boîtier pénètre à l'intérieur du perçage en trou borgne (50) et
(d) le second bout d'arbre (42) est logé de façon susceptible de tourner par l'intermédiaire d'un palier (54) et de façon susceptible de se déplacer axialement sur le tourillon (52).

5. Capteur de déplacement linéaire à câble selon la revendication 4, **caractérisé en ce que** le ressort de pression (72) est disposé entre la face frontale du tourillon (52) et le fond du perçage en trou borgne (50).

6. Capteur de déplacement linéaire à câble selon la revendication 5, **caractérisé en ce que**
(a) des creux coniques (68 et 70 respectivement) sont formés sur la face frontale du tourillon (52) et dans le fond du perçage en trou borgne (50) et
(b) le ressort de pression (72) s'appuie par l'intermédiaire de pièces de pression (74,76) en forme de calotte contre la surface frontale du tourillon (52) et le fond du perçage en trou borgne (50).

7. Capteur de déplacement linéaire à câble selon l'une des revendications 4 à 6, **caractérisé en ce que**
(a) le second bout d'arbre (42) est aplati et relié à un coussinet (78) de façon à ne pas tourner et
(b) l'entraînement de rappel est un ressort à ruban (80) enroulé en spirale qui est fixé, d'une part, sur le coussinet (78) et, d'autre part, sur la surface enveloppant le boîtier (10).

8. Capteur de déplacement linéaire à câble selon l'une des revendications 1 à 7, **caractérisé en ce que** la paroi intermédiaire (18) subdivise l'espace intérieur du boîtier (10) en deux chambres dont l'une (26) comprend le tambour de câble (28) et l'autre (30) comprend le capteur (32).

9. Capteur de déplacement linéaire à câble selon la revendication 8, **caractérisé en ce que** le capteur (32) comprend un transformateur différentiel (62).

10. Capteur de déplacement linéaire à câble selon la revendication 9, **caractérisé en ce que**
(a) le transformateur différentiel (62) présente deux bobines (58,60) décalées axialement l'une par rapport à l'autre et se trouvant sur le même axe par rapport à l'arbre du tambour de câble (28) et
(b) un tourillon axial (65) portant un noyau ferromagnétique (64) se trouve sur un bout d'arbre (40).

11. Capteur de déplacement linéaire à câble selon la revendication 8, **caractérisé en ce que** le capteur (32) comprend un capteur de Hall (94) concourant avec un aimant (96) placé sur l'arbre (38).

12. Capteur de déplacement linéaire à câble selon l'une des revendications 1 à 11, **caractérisé en ce que**
(a) le câble de mesure (38) sortant du boîtier (10) par la sortie de câble de mesure (36) est guidé tangentiellement sur un rouleau (84) permettant une réorientation du câble de mesure (38) et
(b) le rouleau (84) est logé dans un boîtier de rouleau (86) qui est logé quant à lui de façon susceptible de tourner autour d'un axe (90) aligné sur le câble de mesure sortant (38) par rapport au boîtier.

13. Capteur de déplacement linéaire à câble selon la revendication 12, **caractérisé en ce que** le boîtier de rouleau (86) est susceptible de s'encastrer dans des positions angulaires discrètes.
